# EUROPEAN PATENT APPLICATION

(11) **EP 0 534 766 A2**
(43) Date of publication of application: **31.03.1993**
(21) Application number: 92308732.4
(22) Date of filing: 24.09.1992
(51) Int. Cl.: G06F 3/06

(54) **Data write device**

(30) Priority: 26.09.1991 JP 246403/91
(71) Applicant: MITSUBISHI DENKI KABUSHIKI KAISHA, Tokyo (JP)
(72) Inventor: Higuchi, Yutaka, c/o Kitaitami Seisakusho, Itami-Shi, Hyogo-Ken (JP)
(74) Representative: Mounteney, Simon James

(57) **Abstract**

In a data write device, a control circuit 14 is provided between a plurality of optical disk drives 1 installed in the data write device and an interface circuit 6 connecting the data write device to external host computers 8, which writes data from one of the host computers to said plurality of optical disk drives 1 simultaneously, thereby to shorten the time to write the same data from the host computer to a plurality of the optical disk drives.

## Description

### Field of the Invention

This invention relates to a data writing device with a plurality of optical disk drives installed which is connected to a plurality of external host computers to write data from the host computers to the optical disk drives.

### Description of the Related Art

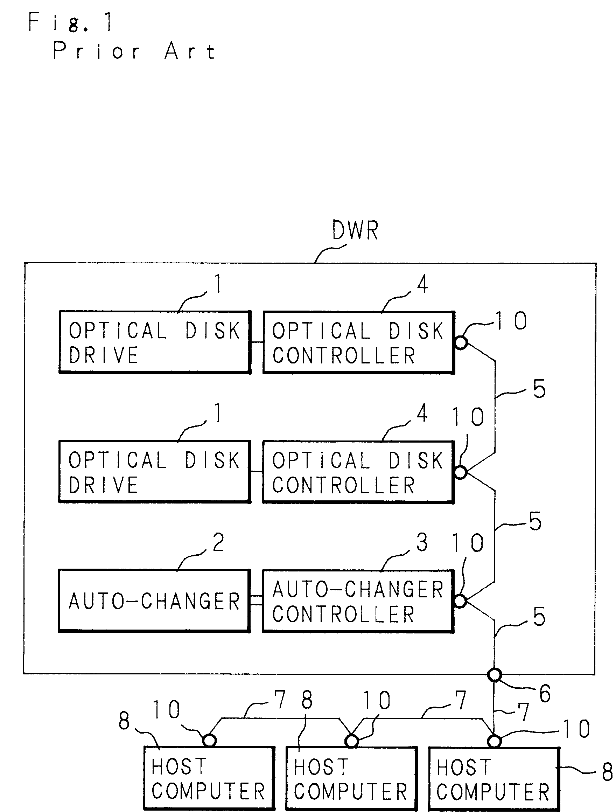

Fig. 1 is a structural block diagram of a conventional optical disk drive of a large capacity disk, disclosed in a catalog "Mitsubishi Optical Disk Drive" [Z-C4711-B KO-9003 (NAK)] published in March, 1990 by Mitsubishi Denki Kabushiki Kaisha. The optical disk drive disclosed in the above prior art is adapted to write/read data via an SCSI (Small Computer System Interface). A data write/read device DWR includes two optical disk drives 1, 1 to which optical disk cartridges (not shown) disposed in the DWR are mounted, two optical disk controllers 4, 4 for controlling the optical disk drives 1, 1, respectively, to transmit data to/from the optical disk drives 1, 1, an auto-changer 2 for selecting one from the plurality of the optical disk cartridges and setting the selected one to a prescribed optical disk drive 1, and an auto-changer controller 3 for controlling and driving the auto-changer 2.

Between cable connecting parts 10, 10 of the optical disk controllers 4, 4 and between cable connecting parts 10 of one of the optical disk and the auto-changer controller 3 are connected by SCSI cables 5, respectively. The cable connecting part 10 of the auto-changer controller 3 is, via the SCSI cable 5, connected to an interface circuit 6 or cable connecting part of the DWR provided so as to connect the DWR with host computers 8, 8, 8 which will be depicted later.

Each of the host computers 8, 8, 8 has a cable connecting part 10. The cable connecting part 10 of each host computer 8 is connected to that of the adjacent host computer 8 by an SCSI cable 7. Moreover, the cable connecting part 10 of one host computer 8 is connected to the interface circuit 6 or cable connecting part of the DWR through an SCSI cable 7.

The operation of the data write/read device will be described below.

When writing data to the optical disk drives 1, 1 in which no optical disk cartridge is set, one of the host computers 8, 8, 8 outputs an instruction signal to the auto-changer controller 3 to set an optical disk cartridge to the optical disk drive 1. As a result, the auto-charger controller 3 drives the auto-changer 2, and the auto-changer 2 sets a predetermined optical disk cartridge to the optical disk drive 1. Thereafter, the host computer 8 outputs a write instruction signal to the optical disk controller 4. Consequently, the optical disk controller 4 controls the subject optical disk drive 1, thereby to write data from the host computer 8 to the optical disk cartridge set in the optical disk drive 1.

When writing the same data to two optical disk cartridges respectively set in two optical disk drives 1, 1, at first, one optical disk drive 1 is controlled to write data into the optical disk cartridge. After the data is completely written into the one optical disk cartridge, the host computer 8 outputs a write instruction signal to the other optical disk controller 4, so that the other optical disk drive 1 is controlled to write the same data as the prior data into the set optical disk cartridge. In other words, when writing the same data into the respective optical disk cartridges set in a plurality of the optical disk drives 1, the data is repeatedly written by the number of times equivalent to the number of the installed optical disk drives 1.

Meanwhile, when reading data from the optical disk cartridge, a predetermined selected optical disk controller 4 is driven to control the corresponding optical disk drive 1. The host computer 8 reads the data through the SCSI cables 5, 7.

As described above, in the prior art, when writing the same data into the respective optical disk cartridges set in a plurality of the optical disk drives, it takes a long time to write the data since the writing time is necessitated proportional to the number of the optical disk drives. Moreover, when the other host computer requires to do something, for example, to read data from the optical disk cartridge, it is impossible to read during the writing, thereby to lower the data processing efficiency in the prior art.

### SUMMARY OF THE INVENTION

This invention has been devised to solve the aforementioned problems, and has for its essential object to provide a data writing device capable of writing data from a second device connected to an interface circuit thereof to a plurality of first devices installed inside simultaneously.

The above and further objects and features of the invention will more fully be apparent from the following detailed description with accompanying drawings.

### BRIEF DESCRIPTION OF THE DRAWINGS

Fig. 1 is a structural block diagram of a conventional data write/read device;
Fig. 2 is a structural block diagram of a data write/read device according to an embodiment of this invention; and
Fig. 3 is a structural block diagram of a data write/read device according to another embodiment of this invention.

### DESCRIPTION OF THE PREFERRED EMBODIMENTS

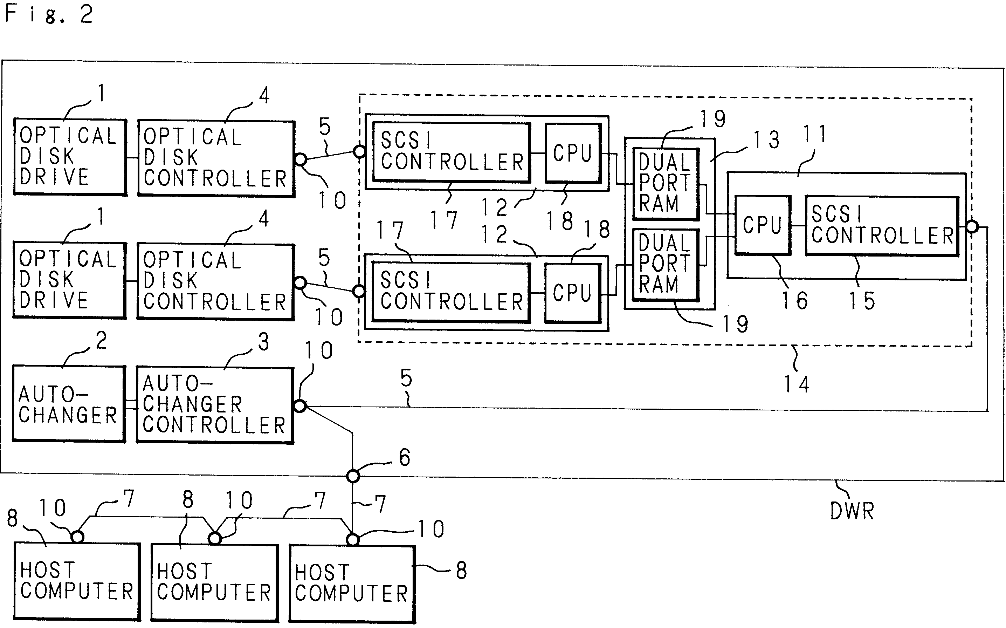

This invention will be discussed in detail with reference to the accompanying drawings of the preferred embodiments thereof. Fig. 2 is a block diagram illustrating the structure of a data write/read device of this invention. The data write/read device DWR of this invention includes two optical disk drives 1, 1 to which optical disk cartridges (not shown) placed in the DWR are to be set, two optical disk controllers 4, 4 each having a cable connecting part 10 of SCSI for controlling the optical disk drives 1, 1, respectively, an auto-changer 2 for setting a selected optical disk cartridge to a predetermined optical disk drive 1, an auto-changer controller 3 connected to the auto-changer 2 to drive the latter, and a control circuit 14 which is connected to the cable connecting parts 10, 10 of the optical disk controllers 4, 4 via respective SCSI cables 5, 5 thereby to transmit data.

The control circuit 14 is provided with two internal controllers 12, 12 each consisting of an SCSI controller 17 and a CPU 18 connected to the SCSI controller 17, a central controller 13 consisting of two dual port RAMs 19, 19, and an external controller 11 consisting of a CPU 16 and an SCSI controller 15 connected thereto.

The SCSI controllers 17, 17 of the internal controllers 12, 12 are connected individually to the optical disk controllers 4, 4 which are described as the first devices. Moreover, the CPUs 18, 18 of the internal controllers 12, 12 are connected to the dual port RAMs 19, 19 of the central controller 13 separately. The dual port RAMs 19, 19 are connected to the CPU 16 of the external controller 11. The SCSI controller 15 of the external controller 11 is connected not only to the CPU 16, but to the cable connecting part 10 of the auto-changer controller 3 and the interface circuit 6 or cable connecting part of the data write/read device DWR via the SCSI cable 5.

The interface circuit 6 or cable connecting part is connected to one of the three host computers 8, 8, 8 which are described as the second external devices via the cable connecting part 10 and the SCSI cable 7. The cable connecting part 10 of each host computer 8 is connected to the cable connecting part 10 of the adjacent host computer 8 by an SCSI cable 7.

The operation of the data write/read device DWR of the structure as above will be depicted hereinafter. When writing the same data into the respective optical disk cartridges set in a plurality of the optical disk drives 1, 1 installed in the DWR in accordance with a write instruction signal outputted from the host computer 8, if the optical disk cartridges are not set in the subject optical disk drives 1, 1, the host computer 8 outputs a set instruction signal to the auto-changer controller 3 so as to set the optical disk cartridges to the optical disk drives 1, 1. In response to the instruction signal from the host computer 8, the auto-changer controller 3 controls the auto-changer 2 to select and set optical disk cartridges to the optical disk drives 1, 1. Then, the host computer 8 transmits a write instruction signal and data to the data writing/reading device DWR.

When the transmitted write instruction signal and data are given to the SCSI controller 15 of the external controller 11, the CPU 16 writes the write instruction signal and data to the dual port RAMs 19, 19 of the central controller 13. The CPUs 18, 18 of the internal controller 12 reads the write instruction signal and data written into the dual port RAMs 19, 19 and supplies them to the SCSI controllers 17, 17. The SCSI controllers 17, 17 transmits the write instruction signal and data to the optical disk controllers 4, 4.

The optical disk controllers 4, 4 control the respective optical disk drives 1, 1 to write the transmitted data into the optical disk cartridges set in the disk units 1, 1. While the optical disk drives 1, 1 execute writing and verify check, the host computer 8 transmits the next data to the SCSI controller 15 of the external controller 11. The CPU 16 of the external controller 11 writes the next data into the dual port RAMs 19, 19 of the central controller 13 before the optical disk drives 1, 1 finish writing and verify check.

The CPUs 18, 18 of the internal controllers 12, 12 read data from the dual port RAMs 19, 19 of the central controller 13 after the optical disk drives 1, 1 complete the writing and verify check, and transmit the next data to the optical disk controllers 4, 4 through the SCSI controllers 17, 17. The optical disk controllers 4, 4 control the optical disk drives 1, 1 so as to write the next data into the respective optical disk cartridges subsequently to the preceding writing. By repeating the aforementioned sequence, a plurality of optical disk drives 1, 1 can write a large quantity of data into the respective optical disk cartridges concurrently.

As described hereinbefore, by adding the control circuit 14, the plurality of optical disk drives 1, 1 can be driven in the same manner as the case where one optical disk drive 1 is controlled by one host computer 8. Therefore, the plurality of optical disk drives 1, 1 can write the data from the host computer 8 into a plurality of optical disk cartridges in the approximately equal time to that when one host computer writes data to one optical disk drive 1.

On the other hand, when reading data from the optical disk cartridge, the host computer 8 outputs a read instruction signal to the control circuit 14. Consequently, the optical disk controller 4 connected to a predetermined optical disk drive 1 is actuated to read data from the optical disk cartridge, then the host computers 8, 8, 8 read the data.

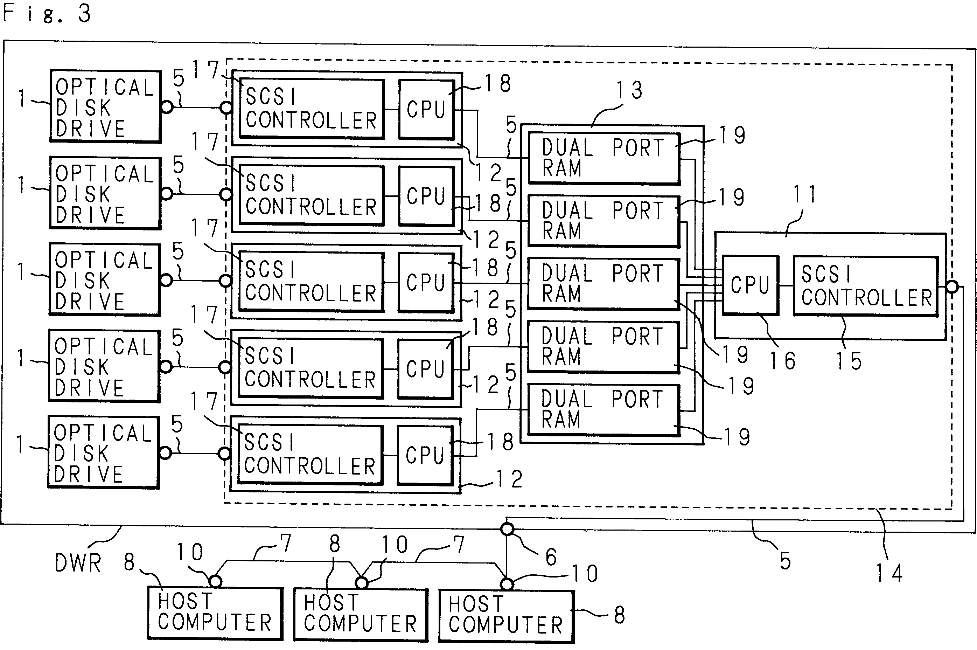

Fig. 3 is a structural block diagram of a data write/read device according to another embodiment of this invention.

The data write/read device DWR of the embodiment includes five optical disk drives 1, 1, 1, 1, 1 and one control circuit 14. The control circuit 14 is constituted of internal controllers 12, 12, 12, 12, 12 each consisting of an SCSI controller 17 and a CPU 18 connected to the SCSI controller 17, a central controller 13 composed of five dual port RAMs 19, 19, 19, 19, 19, and an external controller 11 composed of a CPU 16 and an SCSI controller 15 connected to the CPU 16.

The optical disk drives 1, 1, 1, 1, 1 are connected to the respective SCSI controllers 17, 17, 17, 17, 17 of the internal controllers 12, 12, 12, 12, 12 via individual SCSI cables 5, 5, 5, 5, 5. The CPUs 18, 18, 18, 18, 18 of the internal controllers 12, 12, 12, 12, 12 are connected to the dual port RAMs 19, 19, 19, 19, 19 of the central controller 13 via individual SCSI cables 5, 5, 5, 5, 5.

The dual port RAMs 19, 19, 19, 19, 19 of the central controller 13 are then connected to the CPU 16 of the external controller 11. The SCSI controller 15 of the external controller 11 is connected not only to the CPU 16, but to the interface circuit 6 or cable connecting part provided in the data write/read device DWR through the SCSI cable 5. The other structure of the DWR in Fig. 3 is same as the data write/read device in Fig. 2, and therefore the same parts are designated by the same reference numerals, the description of which will be abbreviated here.

In the above described DWR, when writing the same data into the five optical disk drives 1, 1, 1, 1, 1, similar to the foregoing embodiment, the control circuit 14 controls all the optical disk drives 1, 1, 1, 1, 1, 1 in accordance with a write instruction signal from the host computer 8, whereby the write data from the host computer 8 is simultaneously written into the corresponding optical disk cartridges of the optical disk drives 1, 1, 1, 1, 1.

When any of the host computers 8 is to read the data from one optical disk drive 1, the data read out of the optical disk drive 1 is transmitted to and received by the host computer 8 via the control circuit 14.

According to the embodiment shown in Fig. 3, since the optical disk cartridge set in the optical disk drive 1 is unexchangeable by an auto-changer, the DWR is not provided with an auto-changer to alternatively select and set/reset an optical disk cartridge to the optical disk drive 1.

However, such an SCSI device as the auto-changer controller may be installed on the SCSI cable 5 which connects the external controller 11 with the interface circuit 6 or cable connecting part.

Although the foregoing description is related to the data write/read device capable of write/read data, the same effect is attained even by a data write device. In such case, the SCSI controllers within the control circuit 14 should be interface controllers for write/read data to the optical disk drives 1.

Further, a data write/read device equipped with an interface other than the SCSI interface may achieve the same effect. In this case, however, an interface controller is necessitated to replace the SCSI controllers 15, 17 in the control circuit 14.

Although the optical disk drives are installed in the data write/read device of this invention, this is an example, and the same effect. is obtained also by a hard disk drive, a floppy disk drive, a tape cartridge or the like installed in the DWR.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the meets and bounds of the claims, or equivalence of such meets and bounds thereof are therefore intended to be embraced by the claims.

## Claims

1. A data write device for writing data to a plurality of first units installed therein from a second external device connected thereto, comprising:
a control circuit for controlling to write data from said second device to said plurality of first units substantially at the same time.

2. A data write device as set forth in Claim 1, wherein said control circuit is connected to said first units and second device via interface cables, respectively, and comprises an interface circuit for inputting the write data from said second device, a memory circuit for storing the write data from said second device, and an interface circuit for outputting the write data stored in said memory circuit to said plurality of first devices substantially at the same time.

3. A data write device as set froth in Claim 2, wherein said interface circuit is an SCSI interface circuit.

4. A data write device as set forth in Claim 1, wherein said first unit is an optical disk drive.

5. A data write device as set forth in Claim 4, wherein an optical disk of said optical disk drive is exchangeable.

6. A data write device as set forth in Claim 4, wherein an optical disk of said optical disk drive is unexchangeable by an auto-changer.

7. a data write device as set forth in Claim 2, wherein said memory circuit consists of dual port RAMs.

8. A data write device substantially as herein described with reference to Figure 2 or Figure 3 of the drawings.
